# FASCICULE DE BREVET EUROPEEN

(11) **EP 1 103 991 B1**
(45) Date de publication et mention de la délivrance du brevet: **14.01.2004**
(21) Numéro de dépôt: 00403160.5
(22) Date de dépôt: 14.11.2000
(51) Int. Cl.: H01F 7/124, H01F 7/16, F16K 31/06

(54) **Electrovanne à poussoir de commande manuelle**
Magnetventil mit handbetätigtem Stössel
Solenoid valve with manually operated pushrod

(30) Priorité: 25.11.1999 FR 9914835
(43) Date de publication de la demande: 30.05.2001
(73) Titulaire: Parker Hannifin Rak S.A., 74112 Annemasse Cedex (FR)
(72) Inventeur: Muller, Patrick, 27950 Villez Sous Bailleul (FR)
(74) Mandataire: Robert, Jean-Pierre

(56) Documents cités:
- DE-A- 2 158 248
- DE-A- 3 134 756
- FR-A- 2 388 190
- US-A- 3 351 093
- US-A- 4 501 299
- US-A- 5 285 814

## Description

La présente invention concerne une électrovanne (pneumatique) destinée par exemple au pilotage des dispositifs de distribution des systèmes pneumatiques.

Les électrovannes du type connu comprennent généralement, dans leur configuration la plus simple, un corps dans lequel est fixé un électro-aimant dont le noyau plongeur porte un clapet pour déplacer ce clapet entre une première position correspondant à un état excité de l'électro-aimant dans laquelle le clapet est écarté de son siège et met en communication deux conduits et une deuxième position correspondant à un état non excité de l'électro-aimant dans laquelle le clapet est appliqué contre son siège et isole les conduits l'un de l'autre. Bien entendu, il existe d'autres types d'électrovannes (par exemple trois voies, deux positions) qui, selon la position du ou des clapets, mettent sélectivement en communication l'un de deux conduits avec un troisième en isolant l'autre des deux conduits.

Il est connu d'équiper de telles électrovannes d'un poussoir de commande manuelle permettant d'amener le noyau plongeur et le clapet associé dans la première position en l'absence d'une excitation de l'électro-aimant par exemple pour effectuer des opérations de réglage.

Un premier type de poussoir est monté sur le corps transversalement au noyau plongeur pour coulisser entre une position active dans laquelle une extrémité formant came du poussoir coopère avec le noyau plongeur et déplace celui-ci dans sa première position et une position inactive dans laquelle le poussoir est rappelé élastiquement et l'extrémité formant came est dégagée du noyau plongeur.

Dans un deuxième type de poussoir, du genre à baïonnette, le poussoir est monté sur le corps, d'une part, pour coulisser entre des positions active et inactive comme le poussoir du type précédent et, d'autre part, pour pivoter lorsqu'il est en position active entre une position verrouillée dans laquelle le poussoir coopère avec un élément de butée solidaire du corps qui s'oppose au rappel élastique du poussoir en position inactive, et une position déverrouillée dans laquelle le poussoir échappe à l'élément de butée.

Les poussoirs du premier type sont généralement utilisés dans les électrovannes destinées à être associées à des distributeurs bistables tandis que les poussoirs du deuxième type sont généralement utilisés dans les électrovannes destinées à être associées à des distributeurs monostables. Par ailleurs, les habitudes prises par les utilisateurs d'électrovannes ont créé des préférences pour l'un ou l'autre type qu'un fabricant doit respecter pour satisfaire au mieux son marché. Les fabricants d'électrovannes doivent donc disposer de ces deux types de poussoirs selon la destination des électrovannes alors que par ailleurs la structure du corps de l'électrovanne reste la même. Ceci complique la fabrication de telles électrovannes et induit un surcoût de réalisation relativement important.

Une électrovanne selon le préambule de la revendication 1 est décrit dans les documents FR-A-2 388 190 et DE-A-2 158 248.

Il existe donc un besoin non résolu de manière commode à ce jour d'un moyen unique de commande manuelle d'une électrovanne qui soit simplement adaptable en fonction de la destination de l'électrovanne sur laquelle il est monté.

Par ailleurs, il existe aussi un besoin d'évolution des accès manuels de réglage et de maintenance sur une machine. En période de mise au point, avec un personnel qualifié, on apprécie la possibilité de verrouiller en position les commandes manuelles alors qu'ultérieurement, en période d'exploitation, on préfère supprimer la possibilité de verrouillage afin de ne pas permettre au personnel non spécialisé de mettre la machine en position de ne plus correctement fonctionner.

A cet effet, on prévoit, selon l'invention, une électrovanne comprenant un corps dans lequel est fixé un électro-aimant ayant un noyau plongeur qui porte au moins un clapet et qui est mobile entre des première et deuxième positions correspondant respectivement à des états excité et au repos de l'électro-aimant, et un poussoir de commande manuelle monté sur le corps transversalement au noyau plongeur, d'une part, pour coulisser entre une position active dans laquelle une extrémité formant came du poussoir coopère avec le noyau plongeur pour amener celui-ci dans sa première position et une position inactive dans laquelle le poussoir est rappelé élastiquement et l'extrémité formant came est dégagée du noyau plongeur et, d'autre part, pour pivoter en position active entre une position verrouillée dans laquelle le poussoir coopère avec un élément de butée solidaire du corps qui s'oppose au rappel élastique et une position déverrouillée dans laquelle le poussoir échappe à l'élément de butée, l'élément de butée comprenant des moyens de sa fixation amovible au corps.

Lorsque l'élément de butée est en place, le poussoir peut être verrouillé en position active comme un poussoir à baïonnette. L'électrovanne est alors adaptée à être utilisée avec des distributeurs monostables ou pour satisfaire un certain type d'utilisateurs. Lorsque l'élément de butée est retiré, le poussoir ne peut être verrouillé en position active et fonctionne comme un poussoir simple. L'électrovanne est alors adaptée à être utilisée avec des distributeurs bistables ou pour satisfaire d'autres utilisateurs. L'adaptation de l'électrovanne au type de distributeur qu'elle est destinée à piloter est ainsi réalisée de manière particulièrement simple soit en laissant l'élément de butée du poussoir de commande manuelle soit en retirant celui-ci. De plus, par cette disposition, on offre une électrovanne dont la commande est verrouillable pour une première phase d'utilisation (réglages d'une machine par un personnel spécialisé) et qui ne l'est plus pour des utilisations suivantes (par exemple le cours normal de fonctionnement de la machine) pour lesquelles le personnel est moins spécialisé.

Avantageusement, l'élément de butée est fixé au corps en une zone de celui-ci accessible depuis l'extérieur. Le retrait de l'élément de butée ne nécessite alors pas de démontage de l'électrovanne et est réalisé rapidement.

Selon un mode de réalisation particulier, les moyens de fixation amovibles comportent une patte frangible qui est de préférence agencée pour être frangible par torsion, l'élément de butée comprenant une empreinte pour coopérer avec un outil de type tournevis. Le retrait de l'élément de butée est alors irréversible. En outre, l'élément de butée peut être réalisé en une seule pièce avec le corps, ce qui simplifie la structure de l'électrovanne et en facilite la fabrication.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue partielle en coupe longitudinale d'une électrovanne conforme à l'invention,

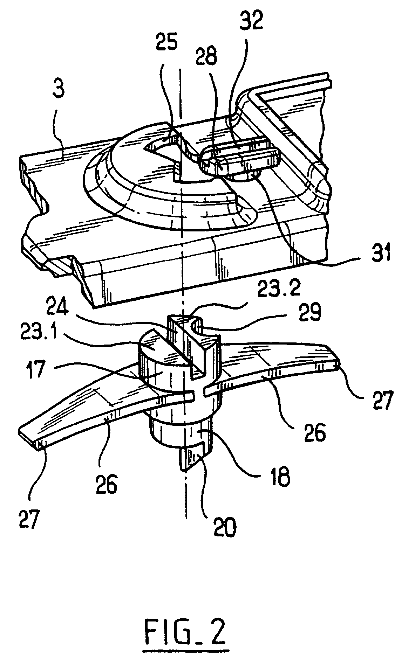

- la figure 2 est une vue partielle en éclaté de l'électrovanne.

L'électrovanne représentée aux figures comprend un corps généralement désigné en 1, en matériau thermoplastique comportant une partie principale 2 évidée et un capot supérieur 3 monté sur la partie principale 2. La partie principale 2 comprend deux sections 4, 5.

Une première section 4 est surmoulée sur un électro-aimant généralement désigné en 6 avec une armature, une bobine et une culasse 7.

De manière connue, l'électro-aimant 6 possède un noyau plongeur 8 qui est monté à coulissement dans un logement cylindrique prolongeant la culasse 7 et dans une ouverture de l'armature de manière à avoir une extrémité 9 adjacente à la culasse 7 et une extrémité opposée 10 s'étendant à l'extérieur de l'armature. Un ressort 11 s'étend autour du noyau plongeur 8 entre un épaulement de l'extrémité 10 et l'armature et tend à écarter le noyau plongeur 8 de la culasse 7 en l'absence d'excitation. Lorsque l'électro-aimant 6 est excité, les forces magnétiques mises en jeu surmontent l'effet du ressort 11 pour plaquer l'extrémité 9 du noyau plongeur 8 contre la paroi terminale de la culasse 7 (entrefer nul).

L'extrémité 10 du noyau plongeur 8 pénètre à l'intérieur d'une deuxième section 5 de la partie principale 2 qui contient la chambre pneumatique de l'électrovanne. L'extrémité 10 a une partie centrale formée d'un matériau en élastomère qui constitue un clapet 12 de l'électrovanne. L'évidement constituant cette chambre reçoit une pièce fonctionnelle insérée à force qui présente un conduit axial 14 débouchant d'une part sur une face axiale de ladite pièce formant un siège 13 et d'autre part à l'extérieur de la section 5 par l'intermédiaire d'un conduit, non représenté, ménagé dans cette section.

En l'absence d'excitation, le clapet 12 est appliqué contre le siège 13 par lequel le conduit 14 débouche dans l'évidement de la section 5. Lorsque l'électro-aimant est excité, le clapet 12 est décollé du siège 13 et met en communication le conduit 14 et au moins un autre conduit non visible ici qui est ménagé dans la partie principale 2 et débouche dans l'évidement de la section 5. Bien entendu, le nombre de clapets et le nombre de conduits débouchant dans la chambre pneumatique dépendent de l'application envisagée de l'électrovanne. En particulier, l'électrovanne peut comprendre deux clapets associés en un équipage relié au noyau plongeur.

L'électrovanne comprend en outre un poussoir de commande manuelle généralement désigné en 15 de forme générale cylindrique s'étendant transversalement par rapport au noyau plongeur 8 et ayant deux extrémités opposées 16, 17 reçues dans deux logements coaxiaux 18, 19 ménagés respectivement dans la partie principale 2 et le capot 3.

L'extrémité 16 comprend une portion terminale 20 en forme de secteur conique qui s'étend dans un logement 21 ayant une section transversale ici en secteur de cercle pour permettre un débattement angulaire de la portion terminale 20 dans le logement 21. Le logement 21 s'étend à partir du fond du logement 18 pour déboucher dans l'évidement de la section 5. Le logement 18 débouche à l'opposé du logement 21 sur une face externe 22 de la partie principale 2 s'étendant sous le capot 3.

L'extrémité 17 possède une face terminale étagée en deux parties 23.1 et 23.2 séparées par une rainure formant une empreinte 24 pour sa manoeuvre qui est accessible par une ouverture 25 ménagée dans le fond du logement 19.

Deux lames élastiques 26 s'étendent transversalement par rapport au poussoir 15 pour avoir leurs extrémités libres 27 en appui contre la face externe 22. Les lames élastiques 26 sont ici en une seule pièce avec le poussoir.

Le poussoir 15 est monté dans les logements 18, 19 pour coulisser entre une position active et une position inactive qui vont être maintenant précisées.

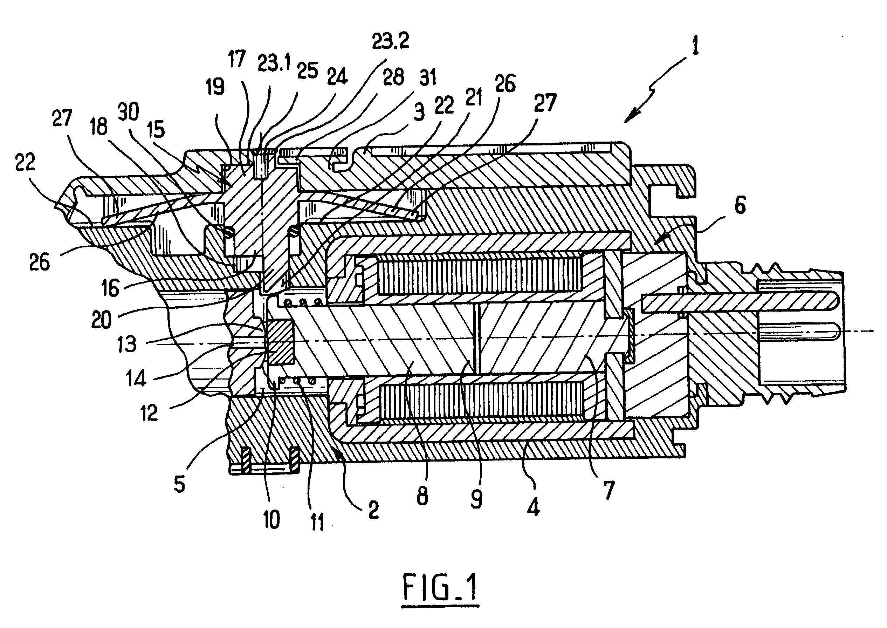

En position inactive (représentée à la figure 1), les lames élastiques 26 repoussent le poussoir 15 de manière que la partie 23.1 de la face terminale de l'extrémité 17 soit appliquée contre le fond du logement 19 et la partie 23.2, en saillie par rapport à la partie 23.1, s'étende dans l'ouverture 25. La portion terminale 20 de l'extrémité 16 est alors escamotée dans le logement 21 de manière à être dégagée du noyau plongeur 8.

En position active, le poussoir 15 est enfoncé (les lames élastiques 26 sont alors déformées) de manière que la portion terminale 20 de l'extrémité 16 s'étende en saillie dans la section 5 et coopère avec l'extrémité 10 du noyau plongeur 8 pour former une came de déplacement de celui-ci plaquant l'extrémité 9 contre la paroi terminale de la culasse 7.

L'électrovanne comprend un élément de butée 28 s'étendant en saillie dans l'ouverture 25 pour être reçu dans une rainure 29 qui est ménagée le long de l'extrémité 17 et débouche sur la partie 23.2 de la face terminale de cette extrémité du poussoir 15. L'élément de butée 28 est relié au capot 3 par des moyens de fixation amovible ici une patte 31 frangible par torsion et est pourvu d'une empreinte 32 pour coopérer avec un tournevis. Ceci présente notamment l'avantage de permettre la réalisation en une seule pièce de l'élément de butée 28 et du capot 3, ce qui simplifie la fabrication de l'électrovanne.

L'élément de butée 28 forme une butée au pivotement du poussoir 15 lorsque celui-ci coulisse entre ses positions inactive et active.

Lorsque le poussoir 15 est complètement enfoncé dans sa position active, l'élément de butée 28 est sorti de la rainure 29 et s'étend légèrement au-dessus de la partie 23.2 de la face terminale de l'extrémité 17 en regard du débouché de la rainure 29. Le poussoir 15 est alors dans une position active déverrouillée dans laquelle les lames élastiques 26 sont susceptibles de ramener le poussoir en position inactive dès que cesse l'effort d'enfoncement du poussoir 15.

En position active déverrouillée, le poussoir 15 peut être pivoté vers une position active verrouillée dans laquelle l'élément de butée 28 ne s'étend plus en regard du débouché de la rainure 29 mais en regard de la partie 23.2. L'élément de butée 28 s'oppose alors à l'effort de rappel du poussoir 15 dans sa position inactive exercé par les lames élastiques 26.

On notera que le coulissement du poussoir entre ses positions inactive et active et le pivotement du poussoir entre ses positions verrouillée et déverrouillée est effectué de manière simple en manoeuvrant le poussoir 15 à l'aide d'un tournevis coopérant avec l'empreinte 24 de l'extrémité 17 au travers de l'ouverture 25 du capot 3. On remarquera en outre qu'un joint torique 30 s'étend autour de l'extrémité 16 pour assurer l'étanchéité du coulissement et du pivotement de celle-ci dans le logement 18.

L'électrovanne telle que décrite ici est adaptée à une première utilisation (par exemple avec des distributeurs monostables).

Pour l'adaptation de l'électrovanne à des distributeurs bistables, ou plus généralement pour une utilisation différente ou avec un personnel différent, il suffit, à l'aide d'un tournevis, de tordre la patte 31 pour briser celle-ci et ôter l'élément de butée 28. Le poussoir 15 ne pourra plus alors être verrouillé en position active.

Bien entendu, l'invention n'est pas limitée au mode de réalisation décrit et on peut y apporter des variantes de réalisation sans sortir du cadre de l'invention tel que défini par les revendications.

En particulier, bien que l'élément de butée ait été décrit comme accessible depuis l'extérieur du corps, l'élément de butée pourrait être disposé au niveau de la face externe 22 ou dans un logement du corps obturé par un volet. L'élément de butée peut en outre être rapporté sur le corps au lieu d'être réalisé en une seule pièce avec celui-ci ou une partie de celui-ci.

## Revendications

1. Electrovanne comprenant un corps (1) dans lequel est fixé un électro-aimant (6) ayant un noyau plongeur (8) qui porte au moins un clapet (12) et qui est mobile entre des première et deuxième positions correspondant respectivement à des états excité et au repos de l'électro-aimant et un poussoir de commande manuelle (15) monté sur le corps transversalement au noyau plongeur, d'une part, pour coulisser entre une position active dans laquelle une extrémité formant came (20) du poussoir coopère avec le noyau plongeur pour amener celui-ci dans sa première position et une position inactive dans laquelle le poussoir est rappelé élastiquement et l'extrémité formant came est dégagée du noyau plongeur et, d'autre part, pour pivoter en position active entre une position verrouillée dans laquelle le poussoir coopère avec un élément de butée (28) solidaire du corps qui s'oppose au rappel élastique et une position déverrouillée dans laquelle le poussoir échappe à l'élément de butée, **caractérisé en ce que** l'élément de butée comprend des moyens (31) autorisant sa séparation définitive d'avec le corps (1).

2. Electrovanne selon la revendication 1, **caractérisé en ce que en ce que** l'élément de butée (28) est fixé au corps (1) en une zone de celui-ci (3) accessible depuis l'extérieur.

3. Electrovanne selon la revendication 1 ou la revendication 2, **caractérisé en ce que** les moyens de fixation amovibles comportent une patte frangible (31).

4. Electrovanne selon la revendication 3, **caractérisé en ce que** la patte frangible (31) est agencée pour être frangible par torsion et **en ce que** l'élément de butée comprend une empreinte (32) pour coopérer avec un outil de type tournevis.

5. Electrovanne selon la revendication 3 ou la revendication 4, **caractérisé en ce que** l'élément de butée (28) est réalisé en une seule pièce avec le corps (1).

6. Electrovanne selon l'une quelconque des revendications précédentes, **caractérisé en ce que** le poussoir (15) comprend des lames élastiques de rappel (26) s'étendant transversalement pour coopérer avec le corps (1) et rappeler le poussoir en position inactive.

## Claims

1. A solenoid valve comprising a body (1) in which there is fixed an electromagnet (6) having a plunger core (8) carrying at least one valve member (12) and movable between first and second positions corresponding respectively to an excited state and to a rest state of the electromagnet, and a manual control pushbutton (15) mounted on the body transversely to the plunger core firstly to slide between an active position in which a cam-forming end (20) of the pushbutton co-operates with the plunger core to bring it into its first position and an inactive position into which the pushbutton is returned resiliently and its cam-forming end is disengaged from the plunger core, and secondly, while in the active position, to pivot between a locked position in which the pushbutton co-operates with an abutment element (28) secured to the body which opposes resilient return, and an unlocked position in which the pushbutton escapes from the abutment element, the valve being **characterized in that** the abutment element includes means (31) enabling it to be definitely detached from the body (1).

2. A valve according to claim 1, **characterized in that** the abutment element (28) is fixed to the body (1) in a zone thereof (3) which is accessible from the outside.

3. A valve according to claim 1 or claim 2, **characterized in that** the releasable fixing means comprise a breakable tab (31).

4. A valve according to claim 3, **characterized in that** the breakable tab (31) is arranged to be breakable by twisting, and **in that** the abutment element comprises an indentation (32) for co-operating with a screwdriver type tool.

5. A valve according to claim 3 or claim 4, **characterized in that** the abutment element (28) is made integrally with the body (1).

6. A valve according to any preceding claim, **characterized in that** the pushbutton (15) has resilient return blades (26) extending transversely to co-operate with the body (1) and to return the pushbutton into its inactive position.

## Patentansprüche

1. Magnetventil, umfassend ein Gehäuse (1), in dem ein Elektromagnet (6) befestigt ist, der einen Magnetkern (8) enthält, der mindestens einen Ventilkörper (12) trägt und zwischen einer ersten und einer zweiten Stellung beweglich ist, die dem angeregten Zustand bzw. dem Ruhezustand des Elektromagneten entsprechen, sowie einen handbetätigten Stößel (15), der an dem Gehäuse quer zum Magnetkern montiert ist, um einerseits zwischen einer aktiven Stellung, in der ein eine Nocke (20) bildendes Ende des Stößels mit dem Magnetkern zusammenwirkt, um diesen in seine erste Stellung zu bringen, und einer inaktiven Stellung verschoben zu werden, in die der Stößel elastisch rückgestellt wird und in der das die Nocke bildende Ende mit dem Magnetkern außer Eingriff steht, und um andererseits in der aktiven Stellung zwischen einer verriegelten Position, in der der Stößel mit einem fest mit dem Gehäuse verbundenen Anschlagelement (28) zusammenwirkt, das sich der elastischen Rückstellung widersetzt, und einer entriegelten Position zu schwenken, in der sich der Stößel vom Anschlagelement entfernt, **dadurch gekennzeichnet, daß** das Anschlagelement Mittel (31) umfaßt, die seine endgültige Trennung vom Gehäuse (1) gestatten.

2. Magnetventil nach Anspruch 1, **dadurch gekennzeichnet, daß** das Anschlagelement (28) am Gehäuse (1) in einem Bereich (3) desselben befestigt ist, der von außen zugänglich ist.

3. Magnetventil nach Anspruch 1 oder Anspruch 2, **dadurch gekennzeichnet, daß** die lösbaren Befestigungsmittel eine zerbrechbare Lasche (31) umfassen.

4. Magnetventil nach Anspruch 3, **dadurch gekennzeichnet, daß** die zerbrechbare Lasche (31) derart angeordnet ist, daß sie durch Torsion zerbrochen werden kann, und daß das Anschlagelement eine Vertiefung (32) enthält, um mit einem Werkzeug nach Art eines Schraubendrehers zusammenzuwirken.

5. Magnetventil nach Anspruch 3 oder Anspruch 4, **dadurch gekennzeichnet, daß** das Anschlagelement (28) einstückig mit dem Gehäuse (1) ausgebildet ist.

6. Magnetventil nach einem der vorhergehenden Ansprüche, **dadurch gekennzeichnet, daß** der Stößel (15) elastische Rückstellungen (26) umfaßt, die sich transversal erstrecken, um mit dem Gehäuse (1) zusammenzuwirken und den Stößel in die inaktive Stellung rückzustellen.
